# EUROPEAN PATENT APPLICATION

(11) **EP 4 797 300 A1**
(43) Date of publication of application: **26.08.2026**
(21) Application number: 24879427.3
(22) Date of filing: 23.08.2024
(51) Int. Cl.: H01G 4/33, H01G 4/08, H01G 4/30

(54) **DIELECTRIC BODY, CAPACITOR, ELECTRIC CIRCUIT, CIRCUIT BOARD, APPARATUS, AND POWER STORAGE DEVICE**

(30) Priority: 18.10.2023 JP 2023179507
(71) Applicant: Panasonic Intellectual Property Management Co., Ltd., Kadoma-shi, Osaka 571-0057 (JP)
(72) Inventor: TAKEUCHI, Hiroki, Osaka 571-0057 (JP); KIKUCHI, Ryosuke, Osaka 571-0057 (JP); MORIMOTO, Kota, Osaka 571-0057 (JP); SAKIYAMA, Kei, Osaka 571-0057 (JP)
(74) Representative: Eisenführ Speiser
(86) International application number: PCT/JP2024/030062
(87) International publication number: WO 2025/083999

(57) **Abstract**

A dielectric of the present disclosure includes an oxide containing hafnium, zirconium, and gallium. In the dielectric, a molar ratio Zr/(Hf + Zr) of a zirconium content to a sum of a hafnium content and the zirconium content is 0.2 or more and less than 1. Further, a molar ratio Ga/(Hf + Zr + Ga) of a gallium content to a sum of the hafnium content, the zirconium content, and the gallium content is more than 0 and less than 0.14.

## Description

### TECHNICAL FIELD

The present disclosure relates to a dielectric, a capacitor, an electric circuit, a circuit board, an apparatus, and a power storage device.

### BACKGROUND ART

It has been known that the dielectric properties of HfO₂ can be changed by substituting a part of Hf with another element. For example, Non Patent Literature 1 describes that various dopants such as Si, Zr, Al, Y, Gd, Sr, and La impart ferroelectricity and antiferroelectricity to a HfO₂ thin film.

Patent Literature 1 describes a capacitor including a dielectric layer formed of a metal oxide containing Hf, Bi, and an element with a valence of 5 or higher. The element with a valence of 5 or higher is selected, for example, from Nb, Ta, Mo, and W. The capacitor may exhibit antiferroelectricity.

### CITATION LIST

### Patent Literature

Patent Literature 1: WO 2019/208340 A1

### Non Patent Literature

Non Patent Literature 1: Advanced Materials, (Germany), 2015, 27, 1811-1831

### SUMMARY OF INVENTION

### Technical Problem

The present disclosure provides a dielectric that is advantageous from the viewpoint of high-capacitance energy storage.

### Solution to Problem

A dielectric of the present disclosure includes an oxide containing hafnium, zirconium, and gallium, wherein
a molar ratio of a zirconium content to a sum of a hafnium content and the zirconium content is 0.2 or more and less than 1, and
a molar ratio of a gallium content to a sum of the hafnium content, the zirconium content, and the gallium content is more than 0 and less than 0.14.

### Advantageous Effects of Invention

The present disclosure can provide a dielectric that is advantageous from the viewpoint of high-capacitance energy storage.

### BRIEF DESCRIPTION OF DRAWINGS

FIG. 1 is a cross-sectional view showing an example of a capacitor of the present disclosure.
FIG. 2 is a cross-sectional view showing another example of a capacitor of the present disclosure.
FIG. 3A is a diagram schematically showing an example of an electric circuit of the present disclosure.
FIG. 3B is a diagram schematically showing an example of a circuit board of the present disclosure.
FIG. 3C is a diagram schematically showing an example of an apparatus of the present disclosure.
FIG. 3D is a diagram schematically showing an example of a power storage device of the present disclosure.
FIG. 4 is a graph showing an X-ray diffraction (XRD) pattern of a dielectric according to Example 1.
FIG. 5 is a graph showing a relation between polarization and an electric field strength in a capacitor according to Example 1.
FIG. 6 is a graph showing a relation between polarization and an electric field strength in a capacitor according to Example 6.
FIG. 7 is a graph showing a relation between polarization and an electric field strength in a capacitor according to Comparative Example 1.
FIG. 8 is a graph showing a relation between a molar ratio Ga/(Hf + Zr + Ga) and a molar ratio Zr/(Hf + Zr) in dielectrics according to Examples and Comparative Examples.

### DESCRIPTION OF EMBODIMENTS

### (Findings on which the present disclosure is based)

At the time of applying voltage to an antiferroelectric material, a relative dielectric constant of the antiferroelectric material increases with the increase of the electric field strength, and the antiferroelectric material exhibits nonlinear dielectric properties. It is anticipated that such an antiferroelectric material is used in high-voltage applications. Furthermore, a paraelectric material exhibits a constant relative dielectric constant in response to changes in the electric field strength, offering advantages in terms of ease of device designing.

HfO₂ is likely to contain both an antiferroelectric phase and a ferroelectric phase. Presence of the ferroelectric phase is likely to cause residual polarization. Therefore, use of HfO₂ in capacitor applications may make it difficult to increase capacitance for energy storage. For example, when HfO₂ partially including the ferroelectric phase is used as the dielectric layer in a capacitor, residual polarization occurs even when the external electric field is zero. This residual polarization is likely to reduce the energy output during discharge of the capacitor.

In light of these circumstances, the present inventors diligently investigated for increasing capacitance for energy storage in a dielectric including an oxide containing hafnium. After extensive trials and errors, the present inventors newly discovered that the residual polarization of the dielectric can be reduced relative to the maximum polarization by incorporating, into the dielectric, an oxide containing hafnium, zirconium, and gallium, and by adjusting the contents of these elements to predetermined ratios. Based on this new finding, the present inventors conceived the dielectric of the present disclosure.

### (Embodiments)

Embodiments of the present disclosure will now be described with reference to the attached drawings. The present disclosure is not limited to the following embodiments.

A dielectric of the present disclosure includes an oxide containing hafnium, zirconium, and gallium. In the dielectric, a molar ratio Zr/(Hf + Zr) of a zirconium content to a sum of a hafnium content and the zirconium content is 0.2 or more and less than 1. Furthermore, a molar ratio Ga/(Hf + Zr + Ga) of a gallium content to a sum of the hafnium content, the zirconium content, and the gallium content is more than 0 and less than 0.14. With this composition, the residual polarization of the dielectric is likely to be smaller relative to the maximum polarization, and the dielectric is likely to have advantageous properties from the viewpoint of increasing capacitance for energy storage.

It is thought that when the contents of hafnium, zirconium, and gallium in the dielectric are adjusted within the aforementioned ranges, the amount of ferroelectric phase included in the dielectric is likely to decrease, and the residual polarization of the dielectric is likely to be smaller relative to the maximum polarization.

The relation between the hafnium content, the zirconium content, and the gallium content in the dielectric may be determined, for example, by methods such as X-ray photoelectron spectroscopy (XPS) and energy-dispersive X-ray spectroscopy (EDX).

In the dielectric, for example, the molar ratio Zr/(Hf + Zr) may be 0.2 or more and 0.8 or less, and the molar ratio Ga/(Hf + Zr + Ga) may be 0.06 or less. In this case, the dielectric properties of the dielectric may approach antiferroelectricity, and the relative dielectric constant of the dielectric may increase with the increase of the electric field strength. Therefore, the dielectric is likely to have more advantageous properties from the viewpoint of increasing capacitance for energy storage. The dielectric may be promising, for example, in high-voltage applications.

In the dielectric, for example, the molar ratio Zr/(Hf + Zr) may be more than 0.8 and less than 1, and the molar ratio Ga/(Hf + Zr + Ga) may be more than 0.06 and less than 0.14. In this case, the dielectric properties of the dielectric are likely to approach paraelectricity, but the residual polarization is likely to be small and the maximum polarization is likely to be large. Therefore, the dielectric is likely to have advantageous properties from the viewpoint of increasing capacitance for energy storage. Furthermore, since an amount of change in the relative dielectric constant of the dielectric is likely to be small even when the electric field strength changes, designing a device using the dielectric may be easier.

The dielectric has a composition represented, for example, by Hf_{1-x-y}ZrₓGa_{y}O_{2±δ}. This composition satisfies requirements 0.2 ≤ x/(1 - y) < 1 and 0 < y < 0.14. In this case, the dielectric is further likely to have advantageous properties from the viewpoint of increasing capacitance for energy storage.

In the above composition, δ is not limited to a specific value. For example, δ is, a value to maintain electrical neutrality of the dielectric. For example, in the case of producing the dielectric by a vapor-phase method, anion vacancies are likely to occur, and deviations from the stoichiometric ratio are likely to occur. In the composition, for example, a requirement 0.00 ≤ δ ≤ 0.07 is satisfied.

The aforementioned composition desirably satisfies requirements 0.2 ≤ x/(1 - y) ≤ 0.8 and 0 < y ≤ 0.06. In this case, the dielectric properties of the dielectric are likely to approach antiferroelectricity, and the relative dielectric constant may increase with the increase of the electric field strength. Therefore, the dielectric is likely to have more advantageous properties from the viewpoint of increasing capacitance for energy storage. The dielectric may be promising, for example, in high-voltage applications.

The composition described above may also satisfy requirements 0.8 < x/(1 - y) < 1 and 0.06 < y < 0.14. In this case, the dielectric properties of the dielectric are likely to approach the paraelectricity, while the residual polarization is likely to be small and the maximum polarization is likely to be large. Therefore, the dielectric is likely to have advantageous properties from the viewpoint of increasing capacitance for energy storage. Furthermore, since an amount of change in the relative dielectric constant of the dielectric is likely to be small even when the electric field strength changes, designing a device using the dielectric may be easier.

The dielectric may be formed of a single phase or may be formed of a plurality of phases.

The crystal structure included in the dielectric is not limited to a specific crystal structure. The dielectric may include, for example, a fluorite structure. In this case, the dielectric is likely to have more advantageous properties from the viewpoint of increasing capacitance for energy storage.

The dielectric includes at least one selected from the group consisting of, for example, a tetragonal phase and an orthorhombic phase. In this case, the dielectric is more likely to have advantageous properties from the viewpoint of increasing capacitance for energy storage.

The method for manufacturing the dielectric is not limited to any particular method. A dielectric can be manufactured by vacuum processes such as radio frequency (RF) magnetron sputtering, pulsed laser deposition (PLD), atomic layer deposition (ALD), and chemical vapor deposition (CVD). Alternatively, the dielectric may be manufactured by wet processes such as chemical solution deposition (CSD), a sol-gel method, and a hydrothermal method.

The form of the dielectric is not limited to any particular form. The dielectric may be formed, for example, as a layer or a film.

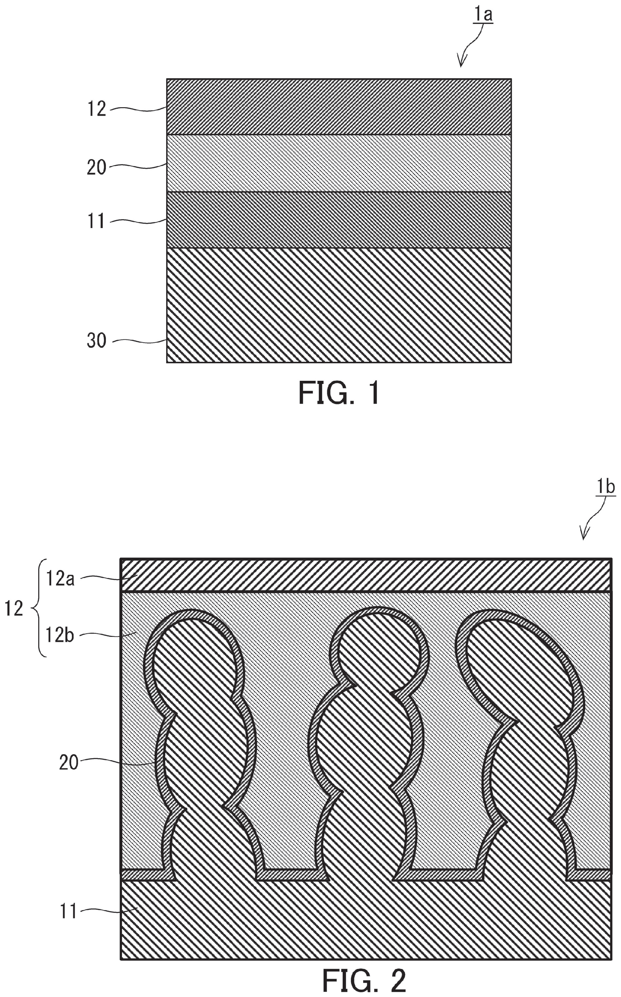

FIG. 1 is a cross-sectional view showing an example of a capacitor of the present disclosure. As shown in FIG. 1, a capacitor 1a includes a first electrode 11, a second electrode 12, and the above-described dielectric 20. The dielectric 20 is disposed between the first electrode 11 and the second electrode 12. Since the capacitor 1a includes the dielectric 20, the capacitor 1a can easily store a large amount of energy.

In the capacitor 1a, the shapes of the first electrode 11, the second electrode 12, and the dielectric 20 are not limited to any particular shapes. The first electrode 11, the second electrode 12, and the dielectric 20 are each formed, for example, as a layer or a film.

The thickness of the first electrode 11 is not limited to a specific value. The thickness of the first electrode 11 is, for example, 50 nm or more. In this case, the capacitor 1a is likely to have a low internal resistance. The thickness of the first electrode 11 is, for example, 500 nm or less. In this case, the entire capacitance density is likely to be high when a plurality of capacitors 1a are integrated to be used.

The material of the first electrode 11 is not limited to a specific material. The first electrode 11 includes at least one selected from the group consisting of, for example, aluminum, titanium nitride, titanium oxide, molybdenum, tungsten, tantalum, zirconium, hafnium, niobium, titanium, silicon, zinc oxide, indium oxide, and tin oxide.

The thickness of the second electrode 12 is not limited to a particular value. The thickness of the second electrode 12 is, for example, 50 nm or more. In this case, the capacitor 1a is likely to have a low internal resistance. The thickness of the second electrode 12 is, for example, 500 nm or less. In this case, the entire capacitance density is likely to be high when a plurality of capacitors 1a are integrated to be used.

The material of the second electrode 12 is not limited to a specific material. The second electrode 12 includes, for example, at least one selected from the group consisting of an electrically conductive polymer, manganese oxide, zinc oxide, indium oxide, tin oxide, titanium nitride, titanium oxide, an electrolyte, and polysilicon. Examples of the electrically conductive polymer include polythiophene, polyaniline, polypyrrole, and a derivative thereof.

As shown in FIG. 1, the capacitor 1a further includes, for example, a support 30. The first electrode 11 is disposed, for example, on the support 30. Thereby, a laminate including the first electrode 11, the dielectric 20, and the second electrode 12 is supported by the support 30, and mechanical strength of the capacitor 1a is likely to be high. The support 30 can be used, for example, as a base for forming the first electrode 11. In the capacitor 1a, the support 30 may be omitted.

The support 30 is not limited to a particular support. The support 30 may be an electrical conductor, a semiconductor, or an insulator. In the case where the support 30 is an electrical conductor, the support 30 and the first electrode 11 may be formed integrally.

The thickness of the support 30 is not limited to a particular value. The thickness of the support 30 may be 50 nm or more and 500 nm or less, or may be more than 500 nm.

An example of a method for manufacturing the capacitor 1a will be described. First, a first electrode 11 is formed on a main surface of the support 30. For example, a vacuum process, plating, or coating may be employed to form the first electrode 11. Examples of the vacuum process include DC sputtering, RF magnetron sputtering, pulsed laser deposition (PLD), atomic layer deposition (ALD), and chemical vapor deposition (CVD). A metal foil such as an aluminum foil or a zirconium foil may be used as the support 30, and the support 30 and the first electrode 11 may be integrally configured.

Next, a film of the dielectric 20 is formed on the first electrode 11. In the formation of the film of the dielectric layer 20, a rapid thermal anneal (RTA) process may be performed on an amorphous precursor of the dielectric 20 to promote crystallization of the dielectric 20.

Next, the second electrode 12 is formed on the dielectric 20. Similarly to the first electrode 11, a vacuum process, plating, or coating may be employed to form the second electrode 12. The capacitor 1a can be manufactured in this manner.

FIG. 2 is a cross-sectional view of another example of a capacitor of the present disclosure. A capacitor 1b shown in FIG. 2 is configured in the same manner as the capacitor 1a, except for the portions to be described in particular. Some components of the capacitor 1b, which are identical or correspond to the components of the capacitor 1a, are marked with the same sign and detailed explanations thereof are omitted. The explanation for the capacitor 1a also applies to the capacitor 1b, unless technically inconsistent.

As shown in FIG. 2, in the capacitor 1b, at least a part of the first electrode 11 is porous. With this configuration, the surface area of the first electrode 11 is likely to be larger, and the capacitance of the capacitor 1b is likely to be higher. Therefore, the capacitor 1b can easily store a large amount of energy. Such a porous structure can be formed, for example, by etching a metal foil, sintering a powder, or the like.

As shown in FIG. 2, for example, a film of the dielectric 20 is formed on a surface of the porous site of the first electrode 11. In this case, a chemical vapor deposition method such as atomic layer deposition (ALD), CVD, or mist CVD can be employed as the method for forming a film of the dielectric 20.

In the capacitor 1b, the second electrode 12 includes, for example, an electrical conductor 12a and an electrolyte 12b. For example, the electrolyte 12b is disposed between the first electrode 11 and the electrical conductor 12a. In the capacitor 1b, the electrolyte 12b is disposed, for example, to fill voids around the porous site of the first electrode 11. The electrolyte 12b includes, for example, at least one selected from the group consisting of manganese oxide, an electrolytic solution, and an electrically conductive polymer. Examples of the electrically conductive polymer include polypyrrole, polythiophene, polyaniline, and a derivative thereof. The electrolyte 12b may be a manganese compound such as manganese oxide. The electrolyte 12b may include a solid electrolyte.

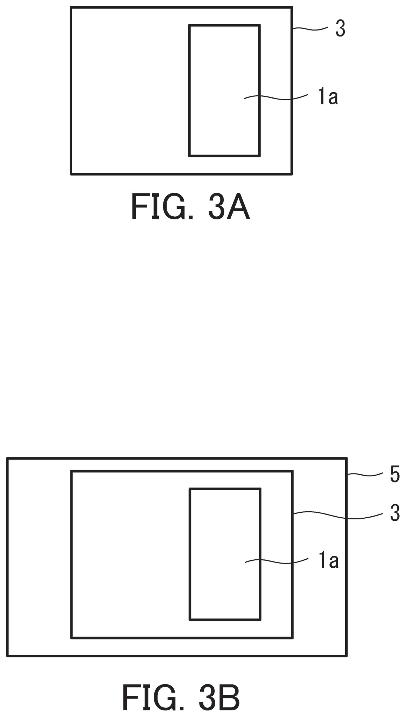

As shown in FIG. 3A, for example, an electric circuit 3 including a capacitor 1a can be provided. The electric circuit 3 is not limited to any particular circuit as long as it includes the capacitor 1a. The electric circuit 3 may be an active circuit or a passive circuit. The electric circuit 3 may be a discharging circuit, a smoothing circuit, a decoupling circuit, or a coupling circuit. Since the electric circuit 3 includes the capacitor 1a, the electric circuit 3 is likely to have desired properties. The electric circuit 3 may include a capacitor 1b in place of the capacitor 1a.

As shown in FIG. 3B, for example, a circuit board 5 including the capacitor 1a can be provided. Since the circuit board 5 includes the capacitor 1a, the circuit board 5 can be designed easily. For example, in the circuit board 5, an electric circuit 3 including the capacitor 1a is formed. The circuit board 5 may also include the capacitor 1b in place of the capacitor 1a.

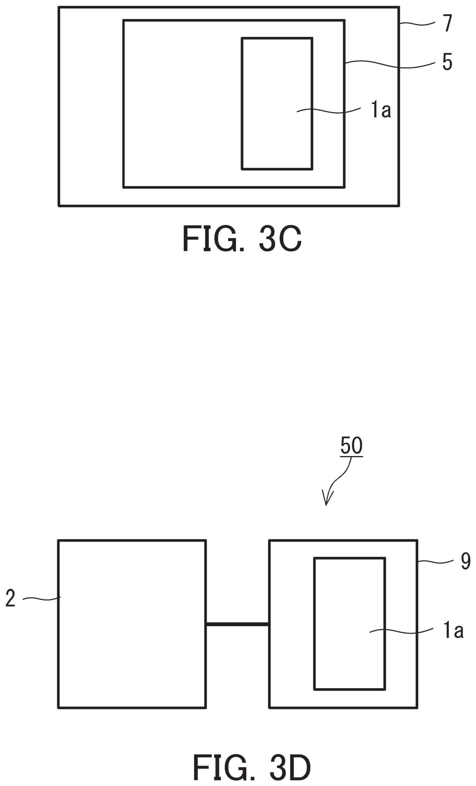

As shown in FIG. 3C, for example, an apparatus 7 including the capacitor 1a can be provided. Since the apparatus 7 includes the capacitor 1a, the apparatus 7 can easily have desired properties. For example, the apparatus 7 includes a circuit board 5 including the capacitor 1a. The apparatus 7 is, for example, an information terminal such as a smartphone or a tablet PC. The apparatus 7 may include the capacitor 1b in place of the capacitor 1a.

As shown in FIG. 3D, for example, a power storage device 9 including a capacitor 1a can be provided. Since the power storage device 9 includes the capacitor 1a, the power storage device 9 can easily have desired properties. The power storage device 9 can be used, for example, to provide a power storage system 50. The power storage system 50 includes the power storage device 9 and a power generating unit 2. In the power storage system 50, electricity generated due to power generation at the power generating unit 2 is stored in the power storage device 9. The power generating unit 2 is, for example, a device for photovoltaic power generation or wind power generation. The power storage device 9 is, for example, a device including a lithium ion battery or a lead-acid storage battery. The power storage device 9 may include the capacitor 1b in place of the capacitor 1a.

Applications of the aforementioned dielectric are not limited to capacitors. For example, it is possible to provide electro-optical elements, memory elements, transistors, ferroelectric data storage, piezoelectric elements, pyroelectric elements, or the like each of which includes the aforementioned dielectric.

### (Addendum)

The above description discloses the following techniques.

### (Technique 1)

A dielectric including an oxide containing hafnium, zirconium, and gallium, wherein
a molar ratio of a zirconium content to a sum of a hafnium content and the zirconium content is 0.2 or more and less than 1, and
a molar ratio of a gallium content to a sum of the hafnium content, the zirconium content, and the gallium content is more than 0 and less than 0.14.

### (Technique 2)

The dielectric according to Technique 1, wherein
the molar ratio of the zirconium content to the sum of the hafnium content and the zirconium content is 0.2 or more and 0.8 or less, and
the molar ratio of the gallium content to the sum of the hafnium content, the zirconium content, and the gallium content is more than 0 and 0.06 or less.

### (Technique 3)

The dielectric according to Technique 1 or 2, having a composition represented by Hf_{1-x-y}ZrₓGa_{y}O_{2±δ}, wherein
the composition satisfies requirements 0.2 ≤ x/(1 - y) < 1 and 0 < y < 0.14.

### (Technique 4)

The dielectric according to Technique 3, wherein
the composition further satisfies requirements 0.2 ≤ x/(1 - y) ≤ 0.8 and 0 < y ≤ 0.06.

### (Technique 5)

The dielectric according to any one of Techniques 1 to 4, including a fluorite structure.

### (Technique 6)

The dielectric according to any one of Techniques 1 to 5, including at least one selected from the group consisting of a tetragonal phase and an orthorhombic phase.

### (Technique 7)

A capacitor including:
a first electrode;
a second electrode; and
a dielectric disposed between the first electrode and the second electrode, wherein
the dielectric is the dielectric according to any one of Techniques 1 to 6.

### (Technique 8)

The capacitor according to Technique 7, wherein
the first electrode includes at least one selected from the group consisting of aluminum, titanium nitride, titanium oxide, molybdenum, tungsten, tantalum, zirconium, hafnium, niobium, titanium, silicon, zinc oxide, indium oxide, and tin oxide.

### (Technique 9)

The capacitor according to Technique 7, wherein
the second electrode includes at least one selected from the group consisting of an electrically conductive polymer, manganese oxide, zinc oxide, indium oxide, tin oxide, titanium nitride, titanium oxide, an electrolyte, and polysilicon.

### (Technique 10)

An electric circuit including the capacitor according to any one of Techniques 7 to 9.

### (Technique 11)

A circuit board including the capacitor according to any one of Techniques 7 to 9.

### (Technique 12)

An apparatus including the capacitor according to any one of Techniques 7 to 9.

### (Technique 13)

A power storage device including the capacitor according to any one of Techniques 7 to 9.

### EXAMPLES

The present disclosure is further explained in detail by referring to Examples. The following Examples demonstrate a part of the present disclosure, and the present disclosure is not limited to the Examples.

### (Example 1)

A polycrystalline TiN thin film was formed on a single-crystal substrate with a Si(100) surface by an RF magnetron sputtering method so that the TiN thin film had a thickness of 70 nm, whereby a first electrode layer was obtained. Next, a dielectric layer having a composition Hf_{0.474}Zr_{0.474}Ga_{0.051}O₂ was formed on the first electrode layer by ALD so that the dielectric layer had a thickness of 15 nm. At this stage, the dielectric in the dielectric layer was an amorphous paraelectric. The composition of the dielectric layer was determined based on the ALD conditions for forming the dielectric layer, with reference to the Growth Per Cycle (GPC) values obtained at the time of depositing HfO₂, ZrO₂, and Ga₂O₃ by ALD. Next, a laminate including the single crystal substrate having a Si(100) surface, the first electrode layer, and the dielectric layer, was heated for 60 seconds at 500°C in a nitrogen atmosphere to perform RTA. This heating treatment is considered to have transformed the structure of the dielectric layer from amorphous to a crystalline structure exhibiting either a tetragonal phase with antiferroelectricity or an orthorhombic phase with ferroelectricity. In this manner, the dielectric according to Example 1 was obtained. Later, an Au thin film was formed on the dielectric layer by vacuum evaporation so that the Au thin film had a thickness of 150 nm, whereby a second electrode layer was obtained. In this manner, a capacitor according to Example 1 was produced.

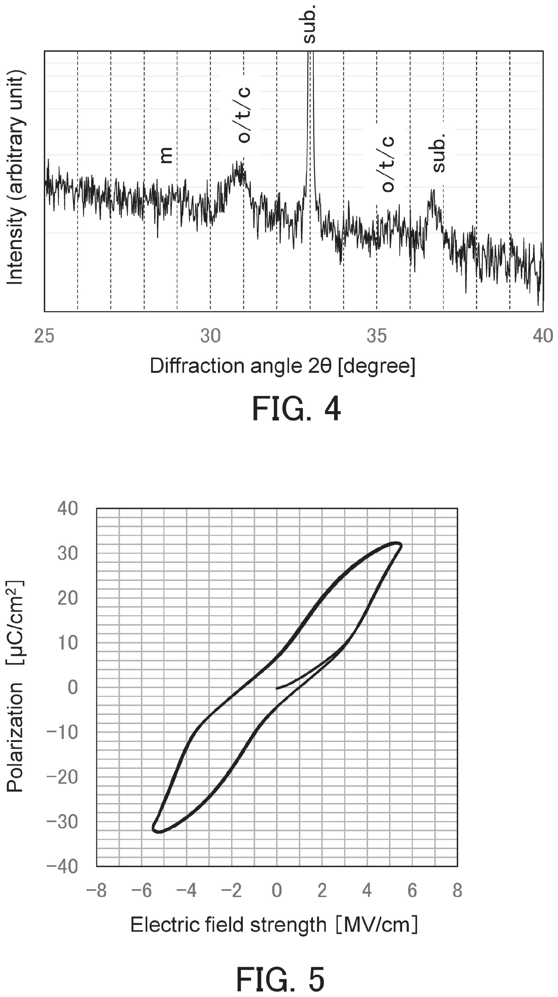

X-ray diffraction (XRD) measurements were performed on samples obtained from the dielectric according to Example 1, using an Aeris XRD instrument manufactured by Malvern Panalytical Ltd. The results are shown in FIG. 4. The vertical axis in FIG. 4 indicates the diffraction intensity in arbitrary units, and the horizontal axis indicates the diffraction angle 2θ. In FIG. 4, the notation "m" indicates the diffraction angle 2θ corresponding to the monoclinic crystal, the notation "o/t/c" indicates the diffraction angle 2θ corresponding to the orthorhombic, tetragonal, or cubic crystal, and the notation "sub." indicates the diffraction angle corresponding to the substrate or the first electrode layer.

A polarization-electric field (P-E) curve measurement was performed on the capacitor according to Example 1, using a ferroelectric tester Premier II manufactured by Radiant Technologies Inc., whereby the dielectric properties of the capacitor according to Example 1 were evaluated. The results are shown in FIG. 5. The vertical axis in FIG. 5 indicates polarization, and the horizontal axis indicates electric field strength. From the P-E curve, a maximum polarization Pₘₐₓ and a residual polarization Pᵣ were identified. The maximum polarization Pₘₐₓ is the maximum value of polarization, and the residual polarization Pᵣ is the polarization at which the electric field strength becomes zero during the decrease in the electric field strength. The difference (Pₘₐₓ - Pᵣ) was calculated by subtracting the residual polarization Pᵣ from the maximum polarization Pₘₐₓ. A large difference thereof is advantageous from the viewpoint of high-capacitance energy storage. The results are shown in Table 1. Furthermore, based on the shape of the P-E curve, the dielectric properties of the dielectric were identified as being closer to antiferroelectricity, paraelectricity, or ferroelectricity, and evaluated as follows. The results are shown in Table 1.
A: The dielectric properties of the dielectric are close to antiferroelectricity.
B: The dielectric properties of the dielectric are close to paraelectricity.
C: The dielectric properties of the dielectric are close to ferroelectricity.

As shown in FIG. 4, a monoclinic crystal was not observed in the dielectric according to Example 1. Therefore, it was confirmed that the main phase of this dielectric is at least one selected from the group consisting of an orthorhombic crystal, a tetragonal crystal, and a cubic crystal. This dielectric is considered to include a fluorite structure. As shown in FIG. 5, the residual polarization Pᵣ is small, suggesting that the ferroelectric phase included in the dielectric according to Example 1 is small. The shape of the P-E curve shown in FIG. 5 indicates that the dielectric properties of the dielectric according to Example 1 were close to antiferroelectricity. The difference (Pₘₐₓ - Pᵣ) is large in the dielectric according to Example 1, suggesting that the ferroelectric phase is small in the dielectric according to Example 1.

### (Example 2)

A dielectric layer and a capacitor according to Example 2 were obtained in the same manner as in Example 1, except that film formation conditions in the ALD were adjusted to achieve a dielectric layer composition of Hf_{0.488}Zr_{0.488}Ga_{0.024}O₂. The dielectric and the capacitor according to Example 2 were evaluated in the same manner as in Example 1. The results are shown in Table 1. In the dielectric according to Example 2, the residual polarization Pᵣ was small, and the difference (Pₘₐₓ - Pᵣ) was large. The dielectric properties of the dielectric according to Example 2 were close to antiferroelectricity, suggesting that the ferroelectric phase was small in the dielectric according to Example 2.

### (Example 3)

A dielectric layer and a capacitor according to Example 3 were obtained in the same manner as in Example 1, except that film formation conditions in the ALD were adjusted to achieve a dielectric layer composition of Hf_{0.237}Zr_{0.711}Ga_{0.051}O₂. The dielectric and the capacitor according to Example 3 were evaluated in the same manner as in Example 1. The results are shown in Table 1. In the dielectric according to Example 3, the residual polarization Pᵣ was small, and the difference (Pₘₐₓ - Pᵣ) was large. The dielectric properties of the dielectric according to Example 3 were close to antiferroelectricity, suggesting that the ferroelectric phase was small in the dielectric according to Example 3.

### (Example 4)

A dielectric layer and a capacitor according to Example 4 were obtained in the same manner as in Example 1, except that film formation conditions in the ALD were adjusted to achieve a dielectric layer composition of Hf_{0.243}Zr_{0.730}Ga_{0.026}O₂. The dielectric and the capacitor according to Example 4 were evaluated in the same manner as in Example 1. The results are shown in Table 1. In the dielectric according to Example 4, the residual polarization Pᵣ was small, and the difference (Pₘₐₓ - Pᵣ) was large. The dielectric properties of the dielectric according to Example 4 were close to antiferroelectricity, suggesting that the ferroelectric phase was small in the dielectric according to Example 4.

### (Example 5)

A dielectric layer and a capacitor according to Example 5 were obtained in the same manner as in Example 1, except that film formation conditions in the ALD were adjusted to achieve a dielectric layer composition of Hf_{0.659}Zr_{0.293}Ga_{0.048}O₂. The dielectric and the capacitor according to Example 5 were evaluated in the same manner as in Example 1. The results are shown in Table 1. In the dielectric according to Example 5, the residual polarization Pᵣ was small, and the difference (Pₘₐₓ - Pᵣ) was large. Further, the dielectric properties of the dielectric according to Example 5 were close to antiferroelectricity, suggesting that the ferroelectric phase was small in the dielectric according to Example 5.

### (Example 6)

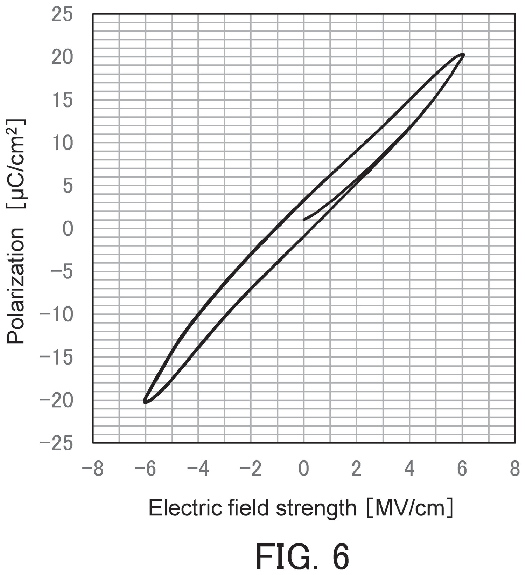

A dielectric layer and a capacitor according to Example 6 were obtained in the same manner as in Example 1, except that film formation conditions in the ALD were adjusted to achieve a dielectric layer composition of Hf_{0.462}Zr_{0.462}Ga_{0.075}O₂. The dielectric and the capacitor according to Example 6 were evaluated in the same manner as in Example 1. The results are shown in Table 1. FIG. 6 is a graph showing a relation between polarization and an electric field strength in the capacitor according to Example 6. The vertical axis in FIG. 6 indicates polarization, and the horizontal axis indicates an electric field strength. In the capacitor according to Example 6, the residual polarization Pᵣ is small, suggesting that the ferroelectric phase included in the dielectric according to Example 6 is small. As shown in FIG. 6, the P-E curve for the capacitor according to Example 6 is linear, and the dielectric properties of the dielectric were close to paraelectricity. On the other hand, the maximum polarization Pₘₐₓ is large, suggesting that the dielectric layer includes also a certain proportion of an antiferroelectric phase. As described above, although the dielectric properties of the dielectric are close to paraelectricity, the difference (Pₘₐₓ - Pᵣ) is large, suggesting that the ferroelectric phase included in the dielectric according to Example 6 is small.

### (Example 7)

A dielectric layer and a capacitor according to Example 7 were obtained in the same manner as in Example 1, except that film formation conditions in the ALD were adjusted to achieve a dielectric layer composition of Hf_{0.451}Zr_{0.451}Ga_{0.098}O₂. The dielectric and the capacitor according to Example 7 were evaluated in the same manner as in Example 1. The results are shown in Table 1. Although the dielectric properties of the dielectric according to Example 7 are close to paraelectricity, the difference (Pₘₐₓ - Pᵣ) is large, suggesting that the ferroelectric phase included in the dielectric according to Example 7 is small.

### (Example 8)

A dielectric layer and a capacitor according to Example 8 were obtained in the same manner as in Example 1, except that film formation conditions in the ALD were adjusted to achieve a dielectric layer composition of Hf_{0.231}Zr_{0.604}Ga_{0.075}O₂. The dielectric and the capacitor according to Example 8 were evaluated in the same manner as in Example 1. The results are shown in Table 1. Although the dielectric properties of the dielectric according to Example 8 are close to paraelectricity, the difference (Pₘₐₓ - Pᵣ) is large, suggesting that the ferroelectric phase included in the dielectric according to Example 8 is small.

### (Example 9)

A dielectric layer and a capacitor according to Example 9 were obtained in the same manner as in Example 1, except that film formation conditions in the ALD were adjusted to achieve a dielectric layer composition of Hf_{0.226}Zr_{0.677}Ga_{0.098}O₂. The dielectric and the capacitor according to Example 9 were evaluated in the same manner as in Example 1. The results are shown in Table 1. Although the dielectric properties of the dielectric according to Example 9 are close to paraelectricity, the difference (Pₘₐₓ - Pᵣ) is large, suggesting that the ferroelectric phase included in the dielectric according to Example 9 is small.

### (Comparative Example 1)

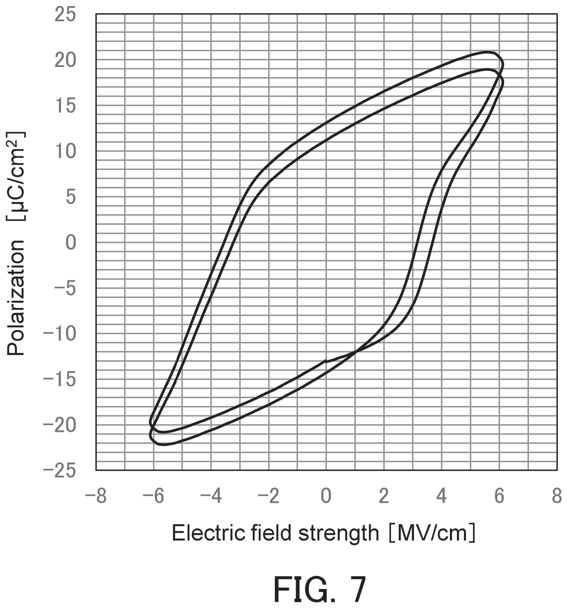

A dielectric layer and a capacitor according to Comparative Example 1 were obtained in the same manner as in Example 1, except that film formation conditions in the ALD were adjusted to achieve a dielectric layer composition of Hf_{0.500}Zr_{0.500}O₂. The dielectric and the capacitor according to Comparative Example 1 were evaluated in the same manner as in Example 1. The results are shown in Table 1. FIG. 7 is a graph showing a relation between polarization and an electric field strength in the capacitor according to Comparative Example 1. The vertical axis in FIG. 7 indicates polarization, and the horizontal axis indicates an electric field strength. As shown in FIG. 7, the dielectric properties of the dielectric according to Comparative Example 1 were close to ferroelectricity, and the residual polarization Pᵣ was large. Therefore, the difference (Pₘₐₓ - Pᵣ) was small in the dielectric according to Comparative Example 1, suggesting that the dielectric was not advantageous from the viewpoint of high-capacitance energy storage.

### (Comparative Example 2)

A dielectric layer and a capacitor according to Comparative Example 2 were obtained in the same manner as in Example 1, except that film formation conditions in the ALD were adjusted to achieve a dielectric layer composition of Hf_{0.250}Zr_{0.750}O₂. The dielectric and the capacitor according to Comparative Example 2 were evaluated in the same manner as in Example 1. The results are shown in Table 1. The dielectric properties of the dielectric according to Comparative Example 2 were close to ferroelectricity, and the residual polarization Pᵣ was large. Therefore, the difference (Pₘₐₓ - Pᵣ) was small in the dielectric according to Comparative Example 2. This may suggest that the dielectric was not advantageous from the viewpoint of high-capacitance energy storage.

### (Comparative Example 3)

A dielectric layer and a capacitor according to Comparative Example 3 were obtained in the same manner as in Example 1, except that film formation conditions in the ALD were adjusted to achieve a dielectric layer composition of Hf_{0.690}Zr_{0.310}O₂. The dielectric and the capacitor according to Comparative Example 3 were evaluated in the same manner as in Example 1. The results are shown in Table 1. The dielectric properties of the dielectric according to Comparative Example 3 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 3. This may suggest that the dielectric was not advantageous from the viewpoint of high-capacitance energy storage.

### (Comparative Example 4)

A dielectric layer and a capacitor according to Comparative Example 4 were obtained in the same manner as in Example 1, except that film formation conditions in the ALD were adjusted such that a HfO₂ thin film free of Zr and Ga was formed as the dielectric layer. The dielectric and the capacitor according to Comparative Example 4 were evaluated in the same manner as in Example 1. The results are shown in Table 1. The dielectric properties of the dielectric according to Comparative Example 4 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 4. This may suggest that the dielectric was not advantageous from the viewpoint of high-capacitance energy storage.

### (Comparative Example 5)

A dielectric layer and a capacitor according to Comparative Example 5 were obtained in the same manner as in Example 1, except that film formation conditions in the ALD were adjusted such that a ZrO₂ thin film free of Hf and Ga was formed as the dielectric layer. The dielectric and the capacitor according to Comparative Example 5 were evaluated in the same manner as in Example 1. The results are shown in Table 1. The dielectric properties of the dielectric according to Comparative Example 5 were close to antiferroelectricity, but the residual polarization Pᵣ was large, and thus, the difference (Pₘₐₓ - Pᵣ) was small. This may suggest that the ferroelectric phase included in this dielectric is not insignificant.

### (Comparative Example 6)

A dielectric layer and a capacitor according to Comparative Example 6 were obtained in the same manner as in Example 1, except that film formation conditions in the ALD were adjusted to achieve a dielectric layer composition of Zr_{0.949}Ga_{0.051}O₂. The dielectric and the capacitor according to Comparative Example 6 were evaluated in the same manner as in Example 1. The results are shown in Table 1. The dielectric properties of the dielectric according to Comparative Example 6 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 6. This may suggest that the dielectric was not advantageous from the viewpoint of high-capacitance energy storage.

### (Comparative Example 7)

A dielectric layer and a capacitor according to Comparative Example 7 were obtained in the same manner as in Example 1, except that film formation conditions in the ALD were adjusted to achieve a dielectric layer composition of Zr_{0.902}Ga_{0.098}O₂. The dielectric and the capacitor according to Comparative Example 7 were evaluated in the same manner as in Example 1. The results are shown in Table 1. The dielectric properties of the dielectric according to Comparative Example 7 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 7. This may suggest that the dielectric was not advantageous from the viewpoint of high-capacitance energy storage.

### (Comparative Example 8)

A dielectric layer and a capacitor according to Comparative Example 8 were obtained in the same manner as in Example 1, except that film formation conditions in the ALD were adjusted to achieve a dielectric layer composition of Zr_{0.860}Ga_{0.140}O₂. The dielectric and the capacitor according to Comparative Example 8 were evaluated in the same manner as in Example 1. The results are shown in Table 1. The dielectric properties of the dielectric according to Comparative Example 8 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 8. This may suggest that the dielectric was not advantageous from the viewpoint of high-capacitance energy storage.

### (Comparative Example 9)

A dielectric layer and a capacitor according to Comparative Example 9 were obtained in the same manner as in Example 1, except that film formation conditions in the ALD were adjusted to achieve a dielectric layer composition of Hf_{0.430}Zr_{0.430}Ga_{0.140}O₂. The dielectric and the capacitor according to Comparative Example 9 were evaluated in the same manner as in Example 1. The results are shown in Table 1. The dielectric properties of the dielectric according to Comparative Example 9 were close to paraelectricity, and the residual polarization Pᵣ was small, but the maximum polarization Pₘₐₓ was also small. Therefore, the difference (Pₘₐₓ - Pᵣ) was small in the dielectric according to Comparative Example 9. This may suggest that the dielectric was not advantageous from the viewpoint of high-capacitance energy storage.

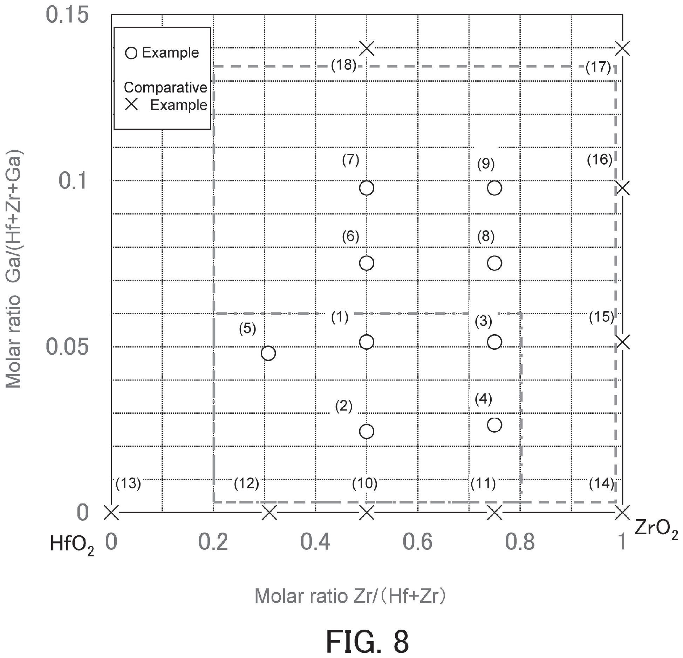

As shown in Table 1, the Pₘₐₓ - Pᵣ values for the dielectrics according to Examples 1 to 9 are large, while the dielectrics include a small amount of ferroelectric phase, suggesting that the dielectrics have properties advantageous from the viewpoint of high-capacitance energy storage. FIG. 8 is a graph showing a relation between a molar ratio Ga/(Hf + Zr + Ga) and a molar ratio Zr/(Hf + Zr) in the dielectrics according to Examples and Comparative Examples. In FIG. 8, the vertical axis indicates the molar ratio Ga/(Hf + Zr + Ga), and the horizontal axis indicates the molar ratio Zr/(Hf + Zr). In FIG. 8, the circular plots indicate Examples, and the cross plots indicate Comparative Examples. In Table 1, the symbols assigned to the respective plots in FIG. 8 are listed in the corresponding Example or Comparative Example. As shown by the rectangle of a dashed line in FIG. 8, in the dielectrics of Examples, the molar ratio Zr/(Hf + Zr) was 0.2 or more and less than 1, and the molar ratio Ga/(Hf + Zr + Ga) was more than 0, and less than 0.14. These molar ratios within such ranges suggest that the dielectric is likely to exhibit advantageous properties from the viewpoint of high-capacitance energy storage. As shown by the rectangle of a dash-dotted line in FIG. 8, in the dielectrics according to Examples 1 to 5, the molar ratio Zr/(Hf + Zr) was 0.2 or more and 0.8 or less, and the molar ratio Ga/(Hf + Zr + Ga) was more than 0 and 0.06 or less. These molar ratios within such ranges suggest that the dielectric is likely to exhibit more advantageous properties for high-capacitance energy storage.

**[Table 1]**

| | | Dielectric Hf_{1-x-y}ZrₓGa_{y}O₂ | | | Molar ratio Zr/(Hf+Zr) | Molar ratio Ga/(Hf+Zr+Ga) |
|---|---|---|---|---|---|---|
| | | 1-x-y (Hf) | x (Zr) | y (Ga) | | |
| Example 1 | (1) | 0.474 | 0.474 | 0.051 | 0.500 | 0.051 |
| Example 2 | (2) | 0.488 | 0.488 | 0.024 | 0.500 | 0.024 |
| Example 3 | (3) | 0.237 | 0.711 | 0.051 | 0.750 | 0.051 |
| Example 4 | (4) | 0.243 | 0.730 | 0.026 | 0.750 | 0.026 |
| Example 5 | (5) | 0.659 | 0.293 | 0.048 | 0.308 | 0.048 |
| Example 6 | (6) | 0.462 | 0.462 | 0.075 | 0.500 | 0.075 |
| Example 7 | (7) | 0.451 | 0.451 | 0.098 | 0.500 | 0.098 |
| Example 8 | (8) | 0.231 | 0.694 | 0.075 | 0.750 | 0.075 |
| Example 9 | (9) | 0.226 | 0.677 | 0.098 | 0.750 | 0.098 |
| Comparative Example 1 | (10) | 0.500 | 0.500 | - | 0.500 | 0 |
| Comparative Example 2 | (11) | 0.250 | 0.750 | - | 0.750 | 0 |
| Comparative Example 3 | (12) | 0.690 | 0.310 | - | 0.310 | 0 |
| Comparative Example 4 | (13) | 1.000 | - | - | 0 | 0 |
| Comparative Example 5 | (14) | - | 1.000 | - | 0 | 0 |
| Comparative Example 6 | (15) | - | 0.949 | 0.051 | 0 | 0.051 |
| Comparative Example 7 | (16) | - | 0.902 | 0.098 | 0 | 0.098 |
| Comparative Example 8 | (17) | - | 0.860 | 0.140 | 0 | 0.140 |
| Comparative Example 9 | (18) | 0.430 | 0.430 | 0.140 | 0.500 | 0.140 |

**[Table 1] Continued**

| | | Dielectric property | Maximum polarization Pₘₐₓ [µC/cm²] | Residual polarization Pᵣ [µC/cm²] | Pₘₐₓ-Pᵣ [µC/cm²] | |
|---|---|---|---|---|---|---|
| Example 1 | (1) | A | 31.8 | 5.8 | 26.0 | |
| Example 2 | (2) | A | 30.0 | 10.5 | 19.5 | |
| Example 3 | (3) | A | 22.7 | 3.0 | 19.6 | |
| Example 4 | (4) | A | 27.9 | 2.6 | 25.3 | |
| Example 5 | (5) | A | 30.1 | 8.5 | 21.5 | |
| Example 6 | (6) | B | 20.2 | 2.1 | 18.1 | |
| Example 7 | (7) | B | 17.7 | 2.0 | 15.7 | |
| Example 8 | (8) | B | 18.1 | 2.0 | 16.1 | |
| Example 9 | (9) | B | 20.3 | 5.8 | 14.4 | |
| Comparative Example 1 | (10) | C | 19.4 | 13.0 | 6.4 | |
| Comparative Example 2 | (11) | C | 29.9 | 21.4 | 8.5 | |
| Comparative Example 3 | (12) | B | 11.9 | 3.0 | 8.9 | |
| Comparative Example 4 | (13) | B | 8.3 | 1.1 | 7.2 | |
| Comparative Example 5 | (14) | A | 27.8 | 14.4 | 13.4 | |
| Comparative Example 6 | (15) | B | 12.2 | 1.4 | 10.8 | |
| Comparative Example 7 | (16) | B | 11.4 | 2.1 | 9.3 | |
| Comparative Example 8 | (17) | B | 11.5 | 2.2 | 9.2 | |
| Comparative Example 9 | (18) | B | 11.4 | 1.6 | 9.9 | |

### INDUSTRIAL APPLICABILITY

The dielectric of the present disclosure includes a small amount of ferroelectric phase, whereby the residual polarization is likely to be reduced. The dielectric is advantageous from the viewpoint of high-capacitance energy storage.

## Claims

1. A dielectric comprising an oxide containing hafnium, zirconium, and gallium, wherein
a molar ratio of a zirconium content to a sum of a hafnium content and the zirconium content is 0.2 or more and less than 1, and
a molar ratio of a gallium content to a sum of the hafnium content, the zirconium content, and the gallium content is more than 0 and less than 0.14.

2. The dielectric according to claim 1, wherein
the molar ratio of the zirconium content to the sum of the hafnium content and the zirconium content is 0.2 or more and 0.8 or less, and
the molar ratio of the gallium content to the sum of the hafnium content, the zirconium content, and the gallium content is more than 0 and 0.06 or less.

3. The dielectric according to claim 1, having a composition represented by Hf_{1-x-y}ZrₓGa_{y}O_{2±δ}, wherein
the composition satisfies requirements 0.2 ≤ x/(1 - y) < 1 and 0 < y < 0.14.

4. The dielectric according to claim 3, wherein
the composition further satisfies requirements 0.2 ≤ x/(1 - y) ≤ 0.8 and 0 < y ≤ 0.06.

5. The dielectric according to claim 1, comprising a fluorite structure.

6. The dielectric according to claim 1, comprising at least one selected from the group consisting of a tetragonal phase and an orthorhombic phase.

7. A capacitor comprising:
a first electrode;
a second electrode; and
a dielectric disposed between the first electrode and the second electrode, wherein
the dielectric is the dielectric according to claim 1.

8. The capacitor according to claim 7, wherein
the first electrode comprises at least one selected from the group consisting of aluminum, titanium nitride, titanium oxide, molybdenum, tungsten, tantalum, zirconium, hafnium, niobium, titanium, silicon, zinc oxide, indium oxide, and tin oxide.

9. The capacitor according to claim 7, wherein
the second electrode comprises at least one selected from the group consisting of an electrically conductive polymer, manganese oxide, zinc oxide, indium oxide, tin oxide, titanium nitride, titanium oxide, an electrolyte, and polysilicon.

10. An electric circuit comprising the capacitor according to any one of claims 7 to 9.

11. A circuit board comprising the capacitor according to any one of claims 7 to 9.

12. An apparatus comprising the capacitor according to any one of claims 7 to 9.

13. A power storage device comprising the capacitor according to any one of claims 7 to 9.
